# EUROPÄISCHE PATENTANMELDUNG

(11) **EP 3 453 820 A1**
(43) Veröffentlichungstag der Anmeldung: **13.03.2019**
(21) Anmeldenummer: 18188691.2
(22) Anmeldetag: 13.08.2018
(51) Int. Cl.: E05D 15/10, E05F 15/632, H02G 11/00

(54) **FÜHRUNGSVORRICHTUNG ZUM FÜHREN EINES KABELS FÜR EINE VORZUGSWEISE ZWEIFLÜGELIGE SCHWENK-SCHIEBE-TÜR**

(30) Priorität: 07.09.2017 DE 102017120583
(71) Anmelder: MAN Truck & Bus AG, 80995 München (DE)
(72) Erfinder: Hunzelmann, Tobias, 81925 München (DE)
(74) Vertreter: v. Bezold & Partner Patentanwälte - PartG mbB

(57) **Zusammenfassung**

Die Erfindung betrifft eine Vorrichtung (100) zur Anordnung an eine Fahrzeug-Türkonstruktion, vorzugsweise zur Montage über ein Türportal der Fahrzeug-Türkonstruktion, mit einem vorzugsweise elektrischen Kabel (1) zur Verbindung mit einem Türflügel (2) der Fahrzeug-Türkonstruktion und einer Führungseinrichtung (3) zum abschnittsweisen Führen des Kabels (1), wenn der Türflügel (2) geöffnet oder geschlossen wird. Eine Umlenkeinrichtung (4) dient zur losen und/oder beweglichen Anlage des Kabels (1) und zum Umlenken des Kabels (1), wenn der Türflügel (2) geöffnet oder geschlossen wird.

## Beschreibung

Die Erfindung betrifft eine Vorrichtung zur Montage an eine Fahrzeug-Türkonstruktion, mit einem Kabel zur Verbindung mit einem Türflügel der Fahrzeug-Türkonstruktion und einer Führungseinrichtung zum zumindest abschnittsweisen Führen des Kabels, wenn der Türflügel geöffnet und/oder geschlossen wird.

Omnibusse umfassen üblicherweise sogenannte Schwenk-Schiebe-Türen. Eine technische Herausforderung stellt dabei in der Regel die Kabelverlegung zu den öffen- und schließbaren Türflügeln dar, wobei die Türflügel einem Schwenk- und Schiebevorgang unterliegen. Problematisch ist dabei insbesondere, dass durch den Schwenk- und Schiebevorgang der Türflügel die Kabel zu starker Abnutzung oder sogar zum Kabelbruch neigen, z. B. verursacht durch Biegung oder Torsion der Kabel.

Eine Aufgabe der Erfindung ist es, eine Möglichkeit zu schaffen, mittels der die Gefahr einer Abnutzung oder eines Bruchs eines Kabels zur Verbindung mit einem Türflügel einer vorzugsweise zweiflügeligen Fahrzeug-Türkonstruktion, insbesondere einer zweiflügeligen Schwenk-Schiebe-Türe-Konstruktion, reduziert oder sogar gänzlich vermieden werden kann.

Diese Aufgabe kann mit den Merkmalen des unabhängigen Anspruchs gelöst werden. Vorteilhafte Weiterbildungen der Erfindung können den Unteransprüchen und der folgenden Beschreibung bevorzugter Ausführungsformen der Erfindung entnommen werden.

Die Erfindung schafft eine Vorrichtung zur Anordnung an oder in einer Fahrzeug-Türkonstruktion, insbesondere zur Montage über ein Türportal der Fahrzeug-Türkonstruktion.

Die Vorrichtung kann z. B. die Fahrzeug-Türkonstruktion und/oder einen Seitenwandabschnitt des Fahrzeugs (z. B. Omnibus) umfassen. Die Vorrichtung umfasst ein z. B. elektrisches Kabel zur Verbindung mit einem Türflügel der Fahrzeug-Türkonstruktion und eine Führungseinrichtung zum zumindest abschnittsweisen Führen des Kabels, wenn der Türflügel geöffnet und/oder geschlossen wird. Das Kabel kann z. B. eine oder mehrere vorzugsweise elektrische Leitungen umfassen.

Eine Umlenkeinrichtung dient vorzugsweise zur losen und/oder beweglichen Anlage des Kabels und insbesondere zum Umlenken des Kabels, wenn der Türflügel geöffnet und/oder geschlossen wird.

Die Umlenkeinrichtung definiert zweckmäßig eine Umlenkstelle für das Kabel, wodurch z. B. die Führung des Kabels vorgegeben werden kann.

Durch die Bewegungsmöglichkeit des Kabels und die vordefinierte Umlenkung des Kabels durch die Umlenkstelle kann insbesondere ein Kabelbruch z.B. aufgrund von Torsion oder eine Kabelabnutzung reduziert oder vermieden werden.

Es ist möglich, dass die Führungseinrichtung ein Abdeckelement umfasst und das Abdeckelement einen Führungsraum zum Führen des Kabels begrenzt. Alternativ oder ergänzend kann die Führungseinrichtung das Kabel insbesondere in einem ebenen Bewegungsablauf halten.

Es ist möglich, dass das Kabel in dem Führungsraum und/oder an dem Abdeckelement abrollen kann, wenn der Türflügel geöffnet wird, und/oder vorzugsweise zurückbewegt werden kann, wenn der Türflügel geschlossen wird.

Es ist möglich, dass das Abdeckelement die Umlenkeinrichtung überspannt, vorzugsweise einseitig überspannt. Dadurch kann z. B. gewährleisten werden, dass das Kabel im Bereich der Umlenkeinrichtung sicher gehaltert werden kann, trotz der vorzugsweise nur losen und/oder beweglichen Anlage des Kabels an der Umlenkeinrichtung.

Das Abdeckelement kann zumindest abschnittsweise im Wesentlichen Leisten- oder Streifen-förmig ausgebildet sein und alternativ oder ergänzend zumindest abschnittsweise einen im Wesentlichen Z- oder im Wesentlichen S-förmigen Querschnitt aufweisen.

Das Abdeckelement kann z.B. eine offene Stirnseite und/oder eine offene Unterseite des Führungsraums begrenzen. Es ist möglich, dass das Kabel insbesondere über die offene Stirnseite und/oder die offene Unterseite mit dem Führungsraum in Verbindung steht.

Das Abdeckelement kann z.B. eine vorzugsweise untere, abgerundete und/oder frei abstehende Längskante aufweisen, wobei das Kabel z.B. entlang der Längskante führbar ist und/oder wobei das Kabel über die Längskante mit dem Führungsraum zweckmäßig seitlich in Verbindung steht, insbesondere, wenn der Türflügel geöffnet und/oder geschlossen wird. Es ist möglich, dass die Umlenkeinrichtung ein sich z. B. Stift-förmig erstreckendes Rundelement zur vorzugsweise losen und/oder beweglichen Anlage des Kabels aufweist und z.B. das Rundelement eine zumindest abschnittsweise runde Umlenkkontur für das Kabel umfasst. Das sich z. B. Stift-förmig erstreckende Rundelement kann zumindest abschnittsweise z.B. Pin-förmig, Bolzen-förmig, im Wesentlichen L-förmig, U-förmig oder Ring-förmig oder auf andere geeignete Art und Weise ausgeformt sein.

Das Kabel kann relativ zur Umlenkeinrichtung vorzugsweise um einen Winkel von z. B. über 90°, von über 120° oder sogar von über 150° umgelenkt werden, wenn der Türflügel geöffnet und/oder geschlossen wird. Allerdings wird das Kabel vorzugsweise um einen Winkel von kleiner als z. B. 180° umgelenkt.

Der Türflügel kann einen Verfahrweg in dessen Breitenrichtung aufweisen, wobei die Umlenkeinrichtung relativ zum Verfahrweg vorzugsweise zumindest nahezu mittig angeordnet ist, z.B. mit einer Abweichung von +/- 10cm, +/- 5cm oder +/- 2cm.

Es ist möglich, dass das Kabel mittels eines Öffnungs- und/oder Schließvorgangs des Türflügels nachgezogen werden kann, was insbesondere dadurch bewerkstelligt werden kann, dass die Umlenkeinrichtung relativ zum Verfahrweg des Türflügels in dessen Breitenrichtung zumindest nahezu mittig angeordnet ist und das Kabel lose und/oder beweglich an der Umlenkeinrichtung anliegt. Das kann z. B. dann erforderlich oder hilfreich sein , wenn das Kabel im Montageprozess zu kurz montiert wurde. Dadurch kann der Montageprozess zweckmäßig vereinfacht werden.

Die Fahrzeug-Türkonstruktion ist vorzugsweise eine Schwenk-Schiebe-Türe-Konstruktion mit vorzugsweise zwei Türflügeln.

Die Türantriebseinrichtung kann deshalb vorzugsweise insbesondere zum Antreiben zweier Türflügel der Schwenk-Schiebe-Türe dienen.

Es ist möglich, dass die Umlenkeinrichtung und/oder das Abdeckelement an einem Seitenwandabschnitt des Fahrzeugs z. B. direkt oder indirekt montiert ist, vorzugsweise an einer dem Fahrzeuginnenraum zugewandten Innenseite des Seitenwandabschnitts.

Das Kabel kann z.B. nur auf einer Seite durch das Abdeckelement seitlich geführt sein, wobei das Kabel auf der anderen Seite vorzugsweise durch einen Seitenwandabschnitt des Fahrzeugs geführt werden kann.

Das Kabel kann z.B. außerhalb des Führungsraums vorzugsweise an einen Seitenwandabschnitt des Fahrzeugs fixiert werden.

Der Seitenwandabschnitt umfasst im Kontext der Erfindung vorzugsweise eine Gerippestruktur des Fahrzeugs (z. B. Busgerippe) oder zumindest einen Teil davon (z. B. eine Wandung der Gerippestruktur). Alternativ oder ergänzend kann der Seitenwandabschnitt im Kontext der Erfindung z. B. ein Blechbauteil und/oder ein Profilbauteil, etc. umfassen, das vorzugsweise an oder in die Gerippestruktur des Fahrzeugs an- oder eingebaut sein kann und alternativ oder ergänzend als Schubbauteil dienen kann.

Die Gerippestruktur kann z. B. als Schubblech dienen und/oder zur Aufnahme des Türantriebs und sonstiger Türteile. Es ist möglich, dass das Kabel an dem Abdeckelement vorzugsweise nicht fest fixiert ist, sondern daran vorzugsweise nur entlang gleiten kann.

Wie bereits zuvor erwähnt, kann die Fahrzeug-Türkonstruktion vorzugsweise eine Schwenk-Schiebe-Türe-Konstruktion umfassen, mit vorzugsweise zwei Türflügeln, wobei z. B. eine Türantriebseinrichtung insbesondere zum Öffnen und Schließen der zwei Türflügel dienen kann.

Es ist im Rahmen der Erfindung somit möglich, dass die Offenbarung hierin (z. B. das Kabel, die Führungseinrichtung, die Umlenkeinrichtung und/der das Abdeckelement) einerseits für die eine Türflügelseite gilt, andererseits zweckmäßig analog oder im Wesentlichen identisch (z. B. spiegelsymmetrisch) aber auch für die andere Türflügelseite, so dass die Offenbarung hierin für beide Türflügelseiten Anwendung finden kann.

Die Erfindung ist nicht auf eine wie hierin offenbarte Vorrichtung eingeschränkt, sondern umfasst auch einen Omnibus mit zumindest einer Vorrichtung wie hierin offenbart.

Das Kabel ist vorzugsweise ein flexibles, signalübertragendes und/oder mehradriges Kabel.

Das Kabel kann z. B. ein elektrisches Kabel und/oder ein Steuerkabel sein, z.B. zur Verbindung mit einem oder mehreren Verbrauchern, Sensoren (z.B. Heizscheibe, Spiegelheizung und/oder Türöffnungstaster) und/oder einer Einklemmschutzeinrichtung z. B. in der Hauptschließkante des Türflügels.

Die zuvor beschriebenen bevorzugten Ausführungsformen und Merkmale der Erfindung sind zweckmäßig miteinander kombinierbar. Andere vorteilhafte Weiterbildungen der Erfindung sind in den Unteransprüchen offenbart oder ergeben sich aus der folgenden Beschreibung bevorzugter Ausführungsformen der Erfindung in Verbindung mit den beigefügten Figuren.
- Figur 1: zeigt eine perspektivische Ansicht von vorne einer Vorrichtung gemäß einer Ausführungsform der Erfindung, mit geschlossenen Türflügeln,
- Figur 2: zeigt eine perspektivische Ansicht von vorne der Vorrichtung der Figur 1, mit geöffneten Türflügeln,
- Figur 3: zeigt eine perspektivische Ansicht von hinten der Vorrichtung der Figuren 1 und 2, mit geschlossenen Türflügeln,
- Figur 4: zeigt eine perspektivische Ansicht von vorne der Vorrichtung der Figuren 1 bis 3, mit geschlossenen Türflügeln
- Figur 5: zeigt eine perspektivische Ansicht von vorne der Vorrichtung der Figuren 1 bis 4, mit geöffneten Türflügeln,
- Figur 6: zeigt eine perspektivische Ansicht von hinten der Vorrichtung der Figuren 1 bis 5, mit geöffneten Türflügeln,
- Figur 7: zeigt bei geschlossenem Türflügel eine perspektivische Ansicht von vorne eines Details der Vorrichtung der Figuren 1 bis 6 und
- Figur 8: zeigt bei geöffnetem Türflügel eine perspektivische Ansicht von hinten des Details der Figur 7.

Die Vorrichtung 100 wird unter Bezugnahme auf nur eine Türflügelseite beschrieben (zweckmäßig in den Figuren die jeweils linke Türflügelseite), wobei ersichtlich wird, dass die andere Türflügelseite analog oder im Wesentlichen identisch (z. B. im Wesentlichen spiegelsymmetrisch) ausgeführt sein kann, so dass die Beschreibung sinngemäß für beide Türflügelseiten Anwendung findet.

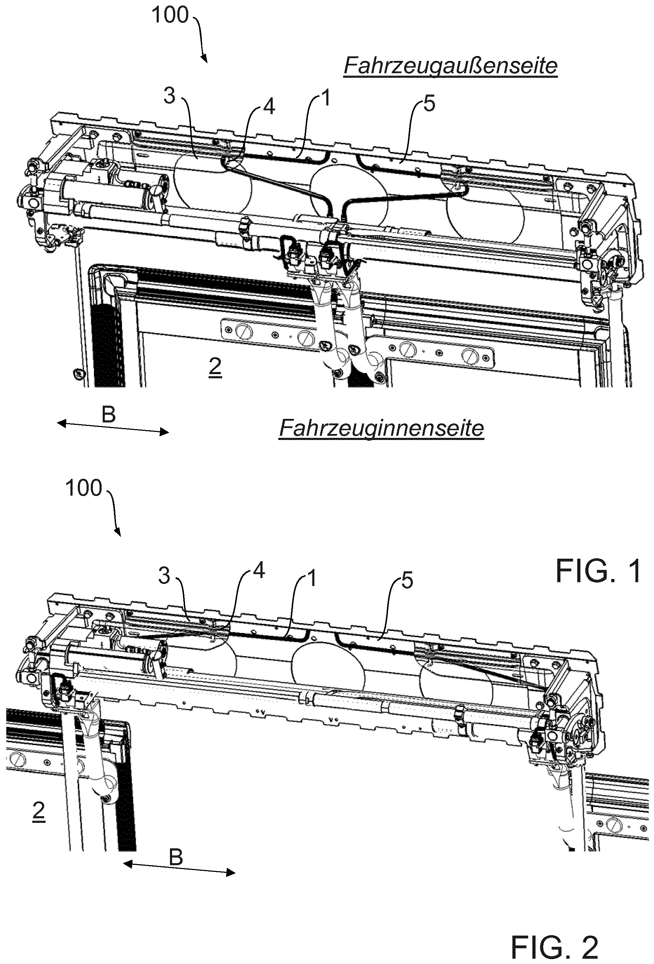

Figur 1 zeigt eine perspektivische Ansicht der Vorrichtung 100 gemäß einer Ausführungsform der Erfindung. Die Vorrichtung 100 umfasst zweckmäßig eine Türkonstruktion und einen Seitenwandabschnitt 5 eines Fahrzeugs (z.B. Omnibusses). Die Vorrichtung 100 dient zur Montage über ein Türportal einer Schwenk-Schiebe-Türe mit zwei Türflügeln 2, um die Türflügel zu öffnen und zu schließen. Figur 1 zeigt die Vorrichtung 100 von vorne und somit von innerhalb des Fahrzeugs.

Die Vorrichtung 100 umfasst ein Kabel 1 zur Verbindung mit einem Türflügel 2 und eine als Abdeckelement ausgeführte Führungsvorrichtung 3 zum abschnittsweisen Führen des Kabels 1, wenn der Türflügel 2 geöffnet oder geschlossen wird.

Eine Umlenkeinrichtung 4 dient zur losen, beweglichen Anlage des Kabels 1 und zum Umlenken des Kabels 1, wenn der Türflügel 2 geschlossen wird. Die Umlenkeinrichtung 4 umfasst ein sich zweckmäßig Stift-förmig erstreckendes Rundelement zur losen, beweglichen Anlage des Kabels 1, wobei das Rundelement eine runde Umlenkkontur für das Kabel 1 aufweist.

Das Abdeckelement 3 begrenzt einen Führungsraum zum Führen des Kabels 1 und überspannt die Umlenkeinrichtung 4 einseitig. Das Abdeckelement 3 begrenzt den Führungsraum somit auf nur einer Seite, wobei ein Seitenwandabschnitt 5 des Fahrzeugs den Führungsraum auf der anderen Seite begrenzt. Der Seitenwandabschnitt 5 kann z. B. ein Fahrzeuggerippe oder ein Teil davon sein.

Das Abdeckelement 3 und zweckmäßig der Seitenwandabschnitt 5 ermöglichen insbesondere, dass das Kabel 1 in einem im Wesentlichen ebenen Bewegungsablauf gehalten werden kann.

Das Abdeckelement 3 ist abschnittsweise im Wesentlichen Leisten- oder Streifen-förmig ausgebildet und weist zumindest abschnittsweise einen im Wesentlichen Z- oder im Wesentlichen S-förmigen Querschnitt auf.

Bezugszeichen B kennzeichnet einen Verfahrweg des Türflügels 2 in Breitenrichtung des Türflügels.

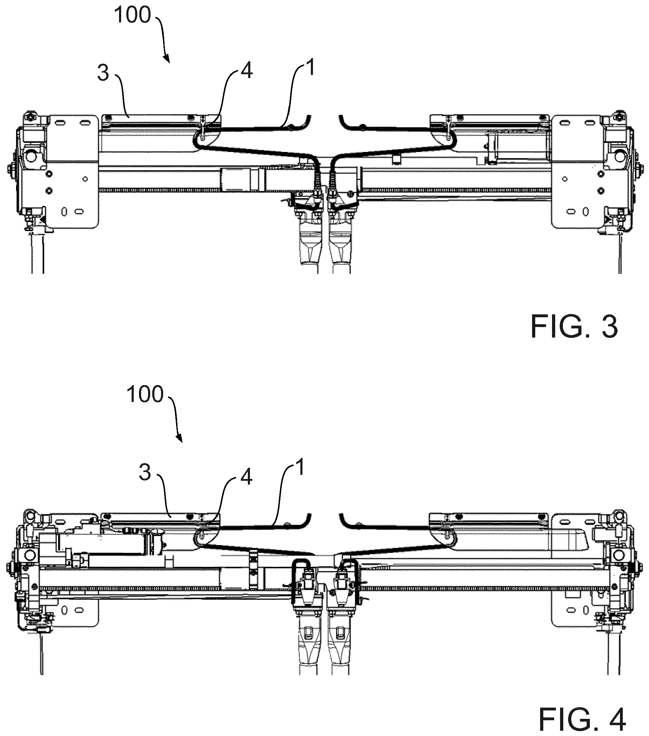

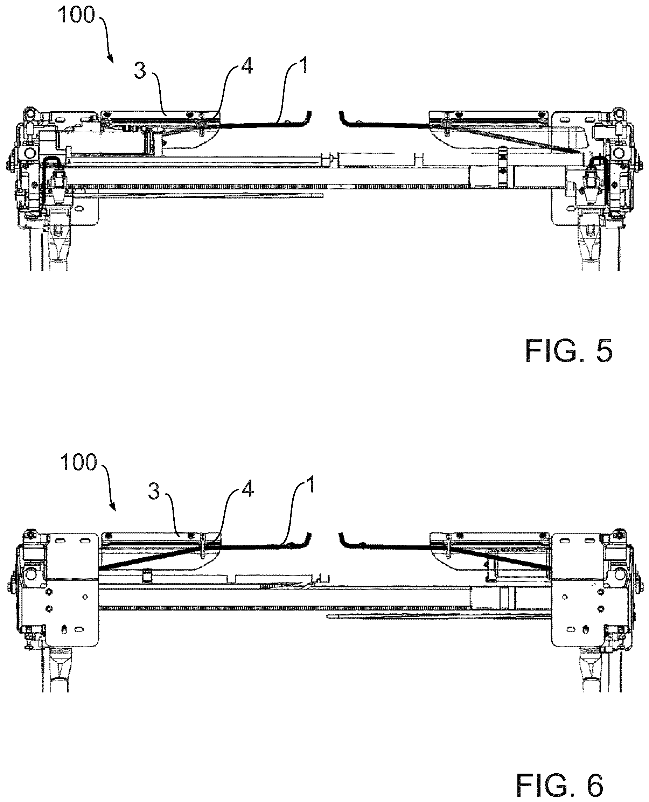

Figur 2 zeigt die Vorrichtung 100 von vorne, mit geöffneten Türflügeln 2. Figur 3 zeigt die Vorrichtung 100 von hinten (und somit von außerhalb des Fahrzeugs), mit geschlossenen Türflügeln 2. Figur 4 zeigt die Vorrichtung 100 von vorne, mit geschlossenen Türflügeln 2. Figur 5 zeigt die Vorrichtung 100 von vorne, mit geöffneten Türflügeln 2. Figur 6 zeigt die Vorrichtung 100 von hinten, mit geöffneten Türflügeln 2.

Ein Vergleich der Figuren 1 bis 6 zeigt insbesondere:

Das Kabel 1 kann in dem Führungsraum und zwar insbesondere an dem Abdeckelement 3 abrollen, wenn der Türflügel 2 geöffnet wird, wobei das Kabel 1 wieder zurückrollen kann, wenn der Türflügel 2 geschlossen wird.

Mittels dem durch das Abdeckelement 3 begrenzten Führungsraum kann zweckmäßig ein Verdrehen (Tordieren) des Kabels 1 verhindert werden.

Das Kabel 1 wird relativ zur Umlenkeinrichtung 4 um einen Winkel von über 120° umgelenkt, wenn der Türflügel 2 geöffnet und geschlossen wird.

Der Türflügel 2 weist einen Verfahrweg in dessen Breitenrichtung B auf, wobei die Umlenkeinrichtung 4 relativ zum Verfahrweg zumindest nahezu mittig angeordnet ist. Dadurch, dass die Umlenkeinrichtung 4 relativ zum Verfahrweg des Türflügels 2 in dessen Breitenrichtung B zumindest nahezu mittig angeordnet ist und das Kabel 1 lose, beweglich an der Umlenkeinrichtung 4 anliegt, kann das Kabel 1 mittels eines Öffnungs-/ Schließvorgangs des Türflügels 2 nachgezogen werden, z. B. wenn das Kabel 1 im Montageprozess z. B. durch einen Bandarbeiter zu kurz montiert wurde, wodurch der Montageprozess vereinfacht werden kann.

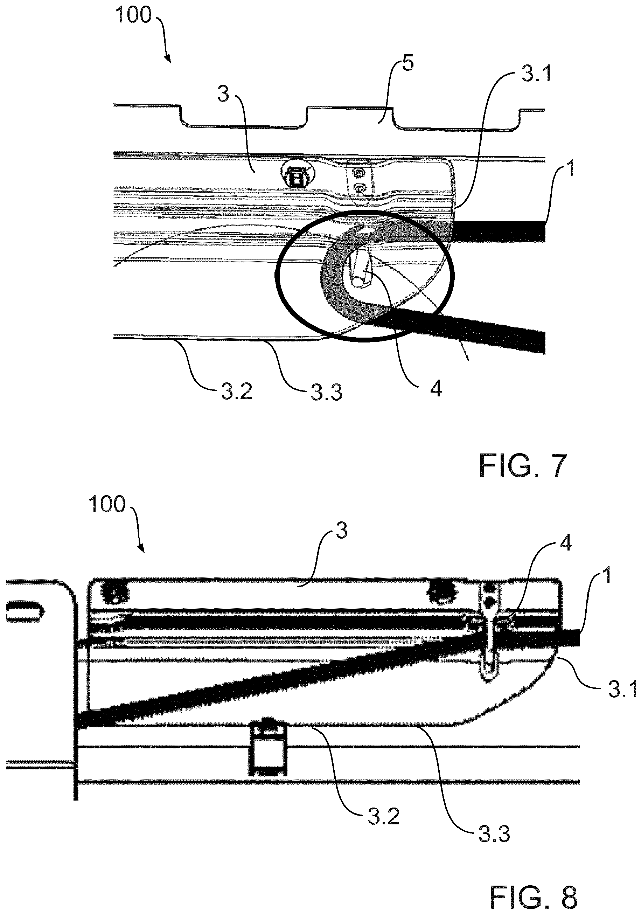

Die Figuren 7 und 8 zeigen Detailansichten, insbesondere den Bereich der Umlenkeinrichtung 4.

Den Figuren 7 und 8 kann insbesondere entnommen werden, dass das Abdeckelement 3 eine offene Stirnseite 3.1 und eine offene Unterseite 3.2 des Führungsraums begrenzt. Das Kabel 1 kann somit über die offene Stirnseite 3.1 und über die offene Unterseite 3.2 mit dem Führungsraum in Verbindung stehen, wenn der Türflügel 2 geöffnet oder geschlossen wird.

Das Abdeckelement 3 weist eine untere, abgerundete und frei abstehende Längskante 3.3 auf. Das Kabel 1 kann entlang der Längskante 3.3 geführt werden, wenn der Türflügel 2 geöffnet oder geschlossen wird, wobei das Kabel 1 über die Längskante 3.3 mit dem Führungsraum in Verbindung steht.

Die Erfindung ist nicht auf die oben beschriebenen bevorzugten Ausführungsformen beschränkt. Vielmehr ist eine Vielzahl von Varianten und Abwandlungen möglich, die ebenfalls von dem Erfindungsgedanken Gebrauch machen und deshalb in den Schutzbereich fallen. Darüber hinaus beansprucht die Erfindung auch Schutz für den Gegenstand und die Merkmale der Unteransprüche unabhängig von den in Bezug genommenen Merkmalen und Ansprüchen.

### Bezugszeichenliste

- 1: Kabel
- 2: Türflügel
- 3: Führungseinrichtung, insbesondere Abdeckelement
- 3.1: offene Stirnseite
- 3.2: offene Unterseite
- 3.3: Längskante
- 4: Umlenkeinrichtung
- 5: Seitenwandabschnitt, z. B. Gerippestruktur oder Teil davon
- B: Verfahrweg des Türflügels in Breitenrichtung
- 100: Vorrichtung

## Patentansprüche

1. Vorrichtung (100) zur Anordnung an oder in einer Fahrzeug-Türkonstruktion, vorzugsweise zur Montage über ein Türportal der Fahrzeug-Türkonstruktion, mit einem vorzugsweise elektrischen Kabel (1) zur Verbindung mit einem Türflügel (2) der Fahrzeug-Türkonstruktion und einer Führungseinrichtung (3) zum abschnittsweisen Führen des Kabels (1), wenn der Türflügel (2) geöffnet oder geschlossen wird, **gekennzeichnet durch** eine Umlenkeinrichtung (4) zur losen und/oder beweglichen Anlage des Kabels (1) und zum Umlenken des Kabels (1), wenn der Türflügel (2) geöffnet oder geschlossen wird.

2. Vorrichtung (100) nach Anspruch 1, **dadurch gekennzeichnet, dass** die Führungseinrichtung (3) ein Abdeckelement (3) umfasst und das Abdeckelement (3) einen Führungsraum zum Führen des Kabels (1) begrenzt und/oder die Führungseinrichtung (3) das Kabel (1) in einem ebenen Bewegungsablauf hält.

3. Vorrichtung (100) nach Anspruch 2, **dadurch gekennzeichnet, dass** das Kabel (1) in dem Führungsraum, vorzugsweise an dem Abdeckelement (3), abrollen kann, wenn der Türflügel (2) geöffnet wird, und zurückbewegt werden kann, wenn der Türflügel (2) geschlossen wird.

4. Vorrichtung (100) nach Anspruch 2 oder 3, **dadurch gekennzeichnet, dass** das Abdeckelement (3) die Umlenkeinrichtung (4) überspannt, vorzugsweise einseitig überspannt.

5. Vorrichtung (100) nach einem der Ansprüche 2 bis 4, **dadurch gekennzeichnet, dass** das Abdeckelement (3) zumindest abschnittsweise Leisten- oder Streifen-förmig ausgebildet ist und/oder zumindest abschnittsweise einen Z- oder S-förmigen Querschnitt aufweist.

6. Vorrichtung (100) nach einem der Ansprüche 2 bis 5, **dadurch gekennzeichnet, dass** das Abdeckelement eine offene Stirnseite (3.1) und/oder eine offene Unterseite (3.2) des Führungsraums begrenzt, über die das Kabel (1) mit dem Führungsraum in Verbindung steht.

7. Vorrichtung (100) nach einem der Ansprüche 2 bis 6, **dadurch gekennzeichnet, dass** das Abdeckelement (3) eine untere, abgerundete und/oder frei abstehende Längskante (3.3) aufweist, wobei das Kabel (1) entlang der Längskante (3.3) führbar ist und/oder wobei das Kabel (1) über die Längskante (3.3) mit dem Führungsraum in Verbindung steht, wenn der Türflügel (2) geöffnet oder geschlossen wird.

8. Vorrichtung (100) nach einem der vorhergehenden Ansprüche, **dadurch gekennzeichnet, dass** die Umlenkeinrichtung (4) ein sich vorzugsweise Stift-förmig erstreckendes Rundelement zur losen und/oder beweglichen Anlage des Kabels (1) umfasst und das Rundelement eine runde Umlenkkontur für das Kabel (1) aufweist.

9. Vorrichtung (100) nach einem der vorhergehenden Ansprüche, **dadurch gekennzeichnet, dass** das Kabel (1) relativ zur Umlenkeinrichtung (4) um einen Winkel von über 90°, von über 120° oder von über 150° umgelenkt wird, wenn der Türflügel (2) geöffnet und geschlossen wird.

10. Vorrichtung (100) nach einem der vorhergehenden Ansprüche, **dadurch gekennzeichnet, dass** der Türflügel (2) einen Verfahrweg in dessen Breitenrichtung (B) aufweist und die Umlenkeinrichtung (4) relativ zum Verfahrweg zumindest nahezu mittig angeordnet ist.

11. Vorrichtung (100) nach einem der vorhergehenden Ansprüche, **dadurch gekennzeichnet, dass** die Umlenkeinrichtung (4) relativ zum Verfahrweg des Türflügels (2) in dessen Breitenrichtung (B) zumindest nahezu mittig angeordnet ist und das Kabel (1) lose und/oder beweglich an der Umlenkeinrichtung (4) anliegt, so dass das Kabel (1), mittels eines Öffnungs- oder Schließvorgangs des Türflügels (2) nachgezogen werden kann, z. B. wenn das Kabel (1) im Montageprozess zu kurz montiert wurde.

12. Vorrichtung (100) nach einem der vorhergehenden Ansprüche, **dadurch gekennzeichnet, dass** die Umlenkeinrichtung (4) und/oder das Abdeckelement (3) an einem Seitenwandabschnitt (5) des Fahrzeugs montiert ist.

13. Vorrichtung (100) nach Anspruch 12, **dadurch gekennzeichnet, dass** das Kabel (1) nur auf einer Seite durch das Abdeckelement (3) seitlich geführt wird, wobei das Kabel (1) auf der anderen Seite durch einen Seitenwandabschnitt (5) des Fahrzeugs geführt wird.

14. Vorrichtung (100) nach Anspruch 12 oder 13, **dadurch gekennzeichnet, dass** das Kabel (1) außerhalb des Führungsraums an einem Seitenwandabschnitt (5des Fahrzeugs fixiert ist.

15. Vorrichtung (100) nach einem der vorhergehenden Ansprüche, **dadurch gekennzeichnet, dass** die Fahrzeug-Türkonstruktion eine Schwenk-Schiebe-Türe-Konstruktion mit vorzugsweise zwei Türflügeln (2) umfasst.

16. Omnibus mit einer Vorrichtung (100) nach einem der vorhergehenden Ansprüche.
